# EUROPEAN PATENT SPECIFICATION

(11) **EP 3 177 516 B1**
(45) Date of publication and mention of the grant of the patent: **29.07.2020**
(21) Application number: 14790349.6
(22) Date of filing: 04.08.2014
(51) Int. Cl.: B62J 1/00, B62J 1/22, B62J 1/26

(54) **SADDLE FOR CYCLES, MOTORCYCLES, QUADRICYCLES**
SATTEL FÜR FAHRRÄDER, MOTORRÄDER UND VIERRÄDER
SELLE POUR CYCLES, MOTOCYCLES, QUADRICYCLES

(43) Date of publication of application: 14.06.2017
(73) Proprietor: Cassani, Luca, 31030 Castelcucco (IT)
(72) Inventor: Cassani, Luca, 31030 Castelcucco (IT)
(74) Representative: Modiano, Micaela Nadia
(86) International application number: PCT/IT2014/000204
(87) International publication number: WO 2016/020943

(56) References cited:
- EP-A2- 1 132 283
- WO-A1-2011/141832
- WO-A1-2012/123876
- US-A- 3 997 214
- US-A1- 2005 046 245

## Description

The present invention relates to a saddle, particularly for cycles, motorcycles, quadricycles and the like.

Conventional saddles are generally constituted by a shell made of a substantially rigid material (for structural purposes) and provided with a covering in order to improve its appearance and comfort.

Saddles are, furthermore, provided with means of connection to the frame.

Conventional implementation solutions can however offer levels of comfort that do not meet the requirements of certain users: persons who sit for many hours on the saddle, or persons with particular requirements such as, for example, professional cyclists or motorcyclists.

This second category of users demand, in fact, the utmost quality and comfort of the saddle, in that such characteristics of the saddle could affect performance and thus the result achieved, for example, in a competition.

US2005046245 discloses a bicycle saddle constructed to have a hard bottom shell, a first elastic layer made of foamed plastics and arranged at the top side of the hard bottom shell, a first covering covered on the first elastic layer over the hard bottom shell, and a second elastic layer covered on the first covering, the second elastic layer being formed of a layer of gel arranged at a top side of the first covering and a second covering covered on the layer of gel.

EP1132283 discloses a saddle for a cycle-like vehicle, such as a bicycle, a motor-assisted bicycle, a moped and a motorcycle, substantially comprising: a tensioning frame for arranging on the cycle-like vehicle; and a leather saddle cover carried by the tensioning frame, wherein the saddle cover comprises at least one cushion element at positions corresponding with average locations of buttock bones for users.

WO2012123876 discloses a support element (e.g. a seat, a saddle or a handgrip) for the human body comprising a layer made from soft and yieldable material and at least one surface insert with different characteristics in terms of appearance and/or comfort, in which said surface insert comprises a visible surface to be in contact with the user, wherein said visible surface has a smaller size than said layer and wherein said surface insert comprises at least one portion embedded in said layer.

US3997214 discloses a compartmented bicycle seat padding adapted to be secured to a bicycle seat having depressions formed therein and wherein said padding is enclosed by an outer leather-like exterior and the compartments of said padding receives a formable, stable, dilatant or thixotropic padding material of said padding such as polybutadiene.

WO2011141832 discloses a seat support, for example a bicycle saddle, comprising a support body made from polymeric materials derived from castor oil, a padding positioned on said body, and a coating that covers the padding, in turn the padding comprises at least one layer of foam.

The principal aim of the present invention is to solve the above mentioned drawbacks by providing a saddle for cycles, motorcycles, quadricycles and the like which makes it possible to achieve a stable seating, thus preventing any slipping.

Within this aim, an object of the invention is to provide a saddle for cycles, motorcycles, quadricycles and the like which is particularly comfortable for the user.

Another object of the present invention is to provide a saddle for cycles, motorcycles, quadricycles and the like which is low cost, easily and practically implemented, and safe in use.

In accordance with the invention there is provided a saddle as defined in the appended claims.

Further characteristics and advantages of the invention will become better apparent from the description of a preferred, but not exclusive, embodiment of the saddle, particularly for cycles, motorcycles, quadricycles and the like according to the invention, which is illustrated by way of nonlimiting example in the accompanying drawings wherein:

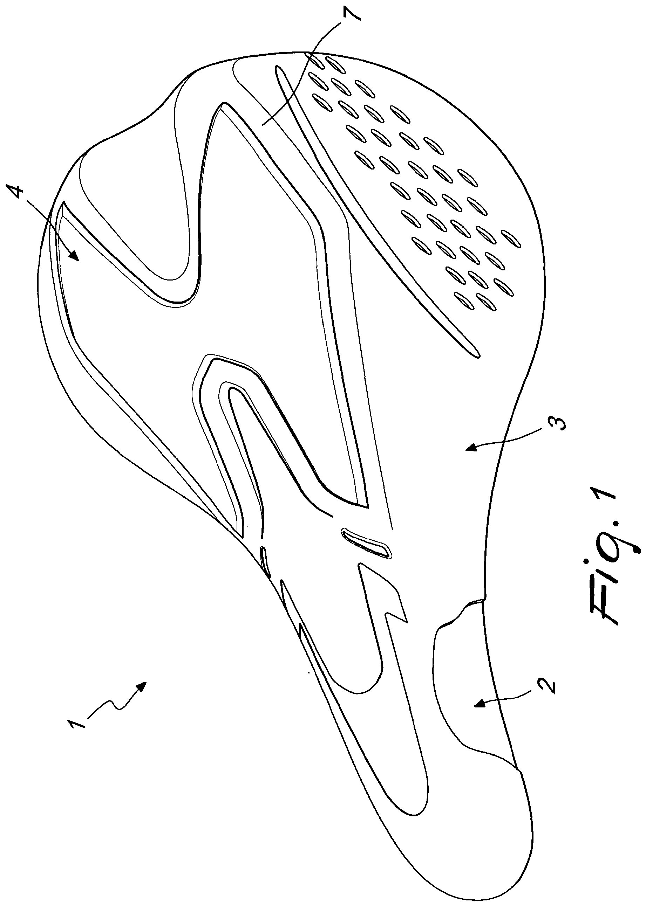

Figure 1 is a perspective view of a saddle, particularly for cycles, motorcycles, quadricycles and the like, which does not form part of the invention, with an element partially sectional;
Figure 2 is a perspective view of a part of a saddle which does not form part of the invention;
Figure 3 is a perspective view of two elements of a saddle, which does not form part of the invention, in an intermediate step of assembly;
Figure 4 is a perspective view of a part of a saddle which does not form part of the invention;
Figure 5 is a partially sectional perspective view of an insert of a saddle, which does not form part of the invention;
Figure 6 is a plan view from above of a part of a saddle, which does not form part of the invention.

With particular reference to the figures, the reference numeral 1 generally designates a saddle, particularly for cycles, motorcycles and quadricycles, which comprises a shell 2 and a respective covering 3.

The covering 3 can comprise a padding in order to increase the comfort of the saddle 1 for the user.

The shell 2 is provided with means of connection to a frame.

Some examples are saddles for cycles (including tricycles, rickshaws, tandems and the like), for motorcycles (including three-wheeler cars and special vehicles including for use in sports) and for vehicles of any nature, such as snowmobiles, vehicles for persons with reduced mobility, jetskis, watercraft (consider the fighting chairs used in deep-sea fishing and/or the steering consoles of some types of vessel), quadricycles and the like.

However, the possibility is not ruled out of providing saddles for horse riding and/or saddles for machines for working out (such as the equipment and benches used in gyms and in sports centers).

According to the invention, the saddle 1 is characterized in that it comprises at least one stratified insert 4 that is integral with the covering 3.

The insert 4 can be of any size up to completely covering the saddle 1.

In particular, at least one first layer 5 of the insert 4 is made of a material preferably selected from among hide, polymeric material, fabric, microfiber, rubber, natural fibers and the like.

More specifically, at least one second layer 6 of the insert 4 is made of a material preferably selected from among silicone material, polymeric material (such as for example polyurethane), composite material, expanded material and the like.

The presence of the insert 4 makes it possible to define an anatomical resting base that is capable of ensuring a correct and stable seating for the user, while maximizing the comfort of the saddle 1.

Any movement or slipping forward of the user, owing to unstable seating, could lead to a shift in the weight of the body in the front, thinner, region of the saddle, thus making the user assume a posture that is incorrect and substantially uncomfortable.

An incorrect posture, in particular, if maintained for a prolonged period of time, could determine an increase of the mechanical stresses that affect the joint structures and the muscle and nerve fasciae, in particular, of the thighs, the feet, the vertebral column, and the cervical column, which can cause not only annoyance but also painful inflammation.

The presence of the insert 4 furthermore makes it possible to decrease the degree of compression of the perineal front part thus considerably increasing the comfort for the user.

In fact the compression of nerves and arteries can cause soreness and numbness.

Furthermore, the overall thickness of the insert 4 is such that it does not create annoyance for the user.

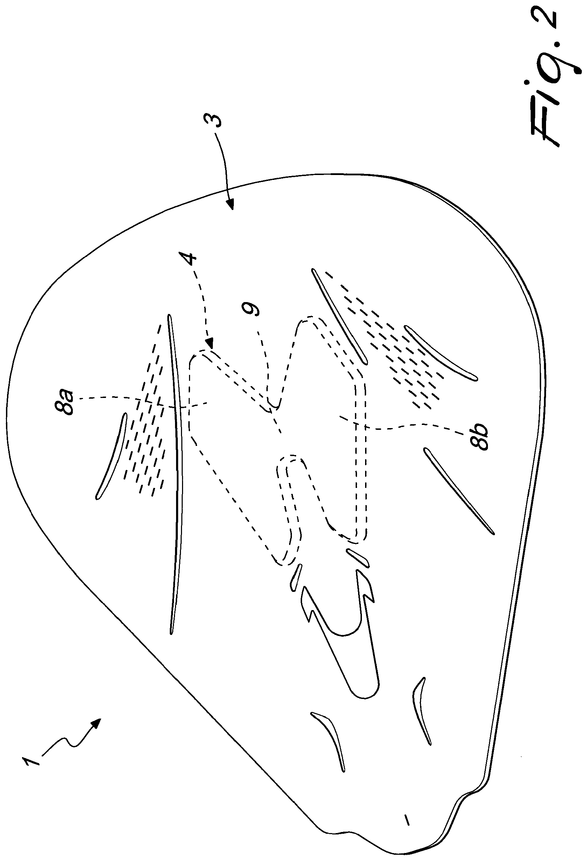

According to a solution of particular effectiveness and efficiency, shown in the accompanying Figure 2, the at least one insert 4 can be interposed between the shell 2 and the covering 3.

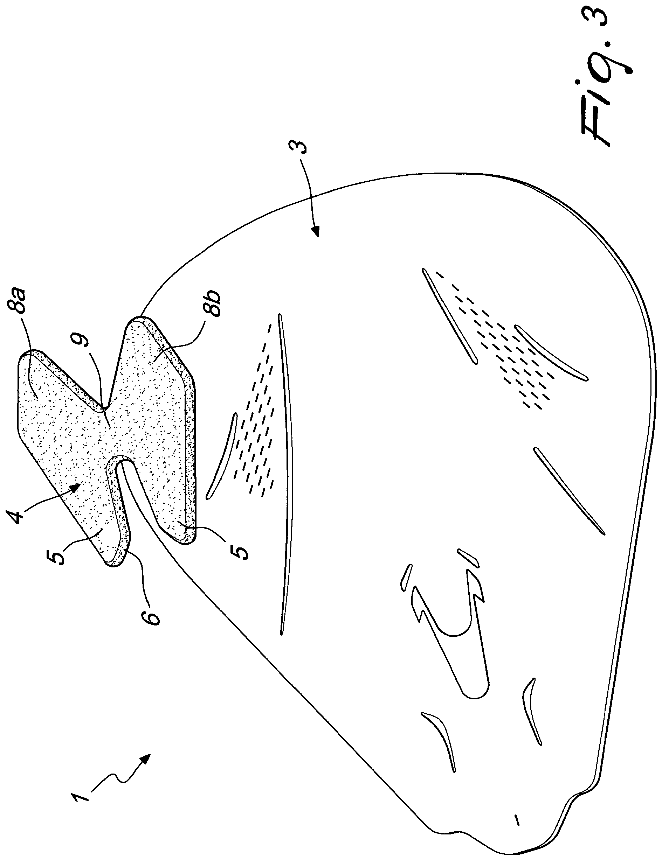

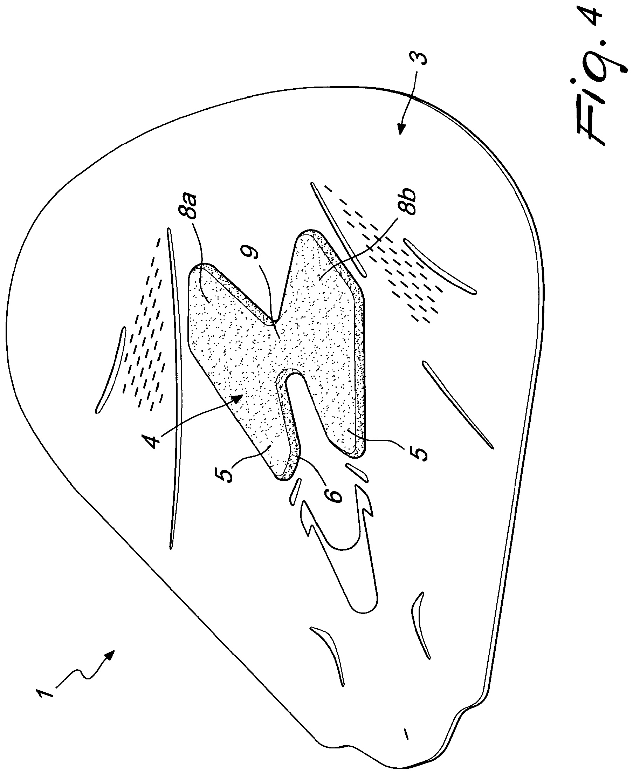

According to a solution of particular utility and practicality, shown in the accompanying Figures 3, 4 and 6, the at least one insert 4 can be arranged above the covering 3.

According to the solution shown in the accompanying Figures from 1 to 4, the insert 4 can be arranged in the rear portion 7 of the saddle 1 at the point that supports the ischial bones of the user, i.e. the part of the body that the user rests on the saddle 1.

In fact, when the user sits on a saddle he/she mainly concentrates his/her weight, in the rear part of the saddle, at the ischial bones.

In the saddle shown in figures 2 to 5, the insert 4 can have two profiled side portions 8a and 8b that are mutually united by a central peduncle 9.

Such portions 8a and 8b can be substantially symmetrical with respect to the central peduncle 9.

The shape and size of the insert 4 will be such as to ensure the support of the ischial bones of persons of different height and build, and thus with different pelvis size.

It is known in fact that persons with different build and height will have a different distance between the ischial bones.

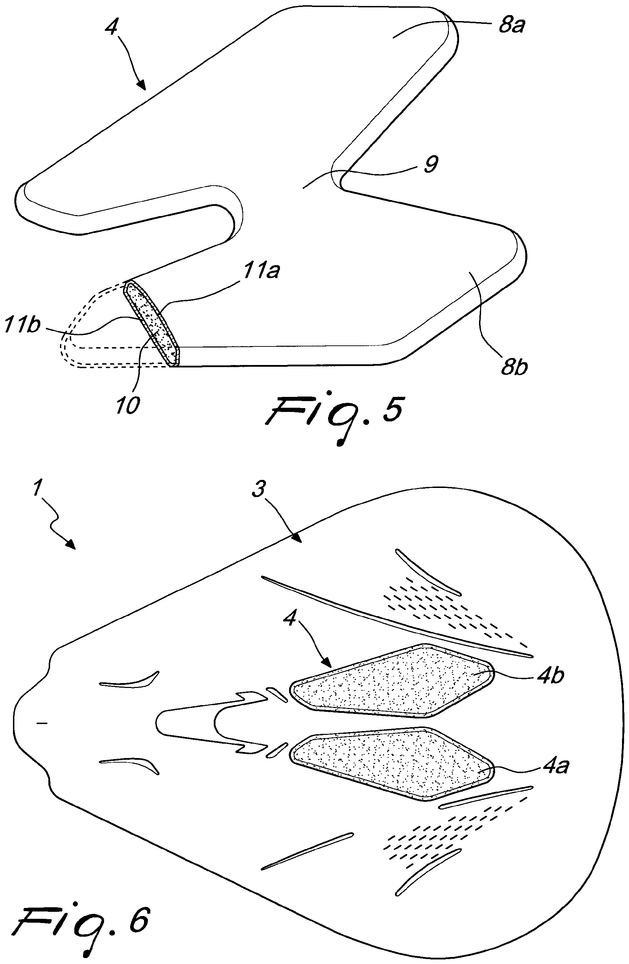

Figure 6 shows a saddle 1 that comprises two inserts 4a and 4b that are arranged symmetrically in the rear portion 7 of the saddle 1.

Each one of the inserts 4a and 4ba can be arranged at the point that supports respectively the right and left ischial bones of the user.

The saddle 1 according to the invention comprises two inserts 4a and 4b which are arranged asymmetrically in the rear portion 7 of the saddle 1.

Each one of the inserts 4a and 4ba can be arranged at the point that supports respectively the right and left ischial bones of the user.

In an embodiment not forming part of the invention, the insert 4 can comprise two layers 5 and 6, a first layer 5 made of microfiber, a material that is comfortable and pleasing to the touch, and a second layer 6 made of ethylene vinyl acetate (generally referred to as EVA).

According to the invention, the insert 4 comprises two layers 5 and 6, a first layer 5 made of polyester and a second layer 6 made of polyvinyl chloride (generally referred to as PVC).

However, the possibility is not ruled out of providing an insert 4 comprising two layers 5 and 6, a first layer 5 made of silicone material and a second layer 6 made of polyvinyl chloride (generally referred to as PVC).

The insert 4, as shown in Figure 5, can comprise three layers 10, 11a and 11b, one layer 10 of expanded material interposed between two sheets 11a and 11b made of polymeric material.

In particular, in Figure 5, the two sheets of polymeric material 11a and 11b have perimetric edges that substantially coincide.

The presence of the insert 4 and in particular of the layer 10 made of polymeric material makes it possible to define a rigid ergonomic resting base that is capable of ensuring correct and stable seating for the user, thus preserving the comfort of the saddle 1 by way of the layer 10 made of expanded material.

Expanded materials are particularly suitable for this embodiment, in that these materials are elastically deformable and also have variable elastic deformability along their surface.

The elastic deformability is in fact ensured by the presence of the air bubbles captured in them, which constitute a plurality of shock-absorbing micro-cushions.

Effectively, the saddle 1 for cycles, motorcycles, quadricycles and the like makes it possible to achieve a stable seating.

Advantageously, the saddle 1 for cycles, motorcycles, quadricycles and the like is particularly comfortable for the user.

The invention, thus conceived, is susceptible of numerous modifications and variations, all of which are within the scope of the appended claims.

## Claims

1. A saddle, particularly for cycles, motorcycles and quadricycles, which is constituted by:
a rigid shell (2);
a respective covering (3);
means of connection of said shell (2) to a frame; and
at least one stratified insert (4) that is integral with said covering (3),
said at least one insert (4) being arranged in the rear portion (7) of said saddle (1) at the points that support the right and left ischial bones of the user,
said at least one insert (4) comprising two layers, a first layer (5) made of polyester or silicone material and a second layer (6) made of polyvinyl chloride,
said at least one insert (4a, 4b) being two in number and being arranged asymmetrically in the rear portion (7) of said saddle (1).

2. The saddle according to claim 1, **characterized in that** said at least one insert (4) is interposed between said shell (2) and said covering (3).

3. The saddle according to claim 1, **characterized in that** said at least one insert (4) is arranged above said covering (3).

## Patentansprüche

1. Ein Sattel, insbesondere für Fahrräder, Motorräder und Vierräder, bestehend aus:
einer harten Schale (2),
einer dazugehörigen Abdeckung (3),
Mittel zur Verbindung der Schale (2) mit einem Rahmen; und
mindestens einem geschichteten Einsatz (4), der integral mit der Abdeckung (3) ist,
wobei der mindestens eine Einsatz (4) im hinteren Abschnitt (7) des Sattels (1) an den Punkten angebracht ist, die das rechte und das linke Sitzbein des Benutzers tragen,
wobei der mindestens eine Einsatz (4) zwei Schichten umfasst, eine erste Schicht (5) aus Polyester oder Silikonmaterial und eine zweite Schicht (6) aus Polyvinylchlorid,
wobei es zwei des mindestens einen Einsatzes (4a, 4b) gibt, die asymmetrisch im hinteren Abschnitt (7) des Sattels (1) angeordnet sind.

2. Der Sattel gemäß Anspruch 1, **dadurch gekennzeichnet, dass** der mindestens eine Einsatz (4) zwischen der Schale (2) und der Abdeckung (3) angeordnet ist.

3. Der Sattel gemäß Anspruch 1, **dadurch gekennzeichnet, dass** der mindestens eine Einsatz (4) oberhalb der Abdeckung (3) angeordnet ist.

## Revendications

1. Selle, en particulier pour cycles, motocycles et quadricycles, qui est constituée par :
une coque (2) rigide ;
un revêtement (3) respectif ;
des moyens de connexion de ladite coque (2) à un cadre ; et
au moins un insert (4) stratifié qui est d'un seul tenant avec ledit revêtement (3),
ledit au moins un insert (4) étant agencé dans la portion arrière (7) de ladite selle (1) aux points qui supportent les os ischiatiques droit et gauche de l'utilisateur,
ledit au moins un insert (4) comprenant deux couches, une première couche (5) réalisée en matériau polyester ou silicone et une seconde couche (6) réalisée en polychlorure de vinyle,
ledit au moins un insert (4a, 4b) étant deux en nombre et étant agencé asymétriquement dans la portion arrière (7) de ladite selle (1).

2. Selle selon la revendication 1, **caractérisée en ce que** ledit au moins un insert (4) est interposé entre ladite coque (2) et ledit revêtement (3).

3. Selle selon la revendication 1, **caractérisée en ce que** ledit au moins un insert (4) est agencé au-dessus dudit revêtement (3).
